# EUROPEAN PATENT APPLICATION

(11) **EP 4 489 364 A1**
(43) Date of publication of application: **08.01.2025**
(21) Application number: 23769498.9
(22) Date of filing: 15.02.2023
(51) Int. Cl.: H04L 45/00

(54) **FORWARDING TABLE GENERATION METHOD AND APPARATUS, AND STORAGE MEDIUM AND ELECTRONIC APPARATUS**

(30) Priority: 16.03.2022 CN 202210259155
(71) Applicant: ZTE Corporation, Shenzhen, Guangdong 518057 (CN)
(72) Inventor: ZHANG, Zheng, Shenzhen, Guangdong 518057 (CN); XU, Benchong, Shenzhen, Guangdong 518057 (CN)
(74) Representative: Chimini, Francesco
(86) International application number: PCT/CN2023/076262
(87) International publication number: WO 2023/173989

(57) **Abstract**

The present invention provides a method and apparatus for generating a forwarding table, a storage medium, and an electronic apparatus. Said method includes: judging, when a target forwarding table is to be generated on the basis of a received first advertisement message, whether there is a second bit-forwarding router-identifier (BFR-ID) same as a first BFR-ID in existing BFR-IDs in the target forwarding table, wherein the first advertisement message is used for advertising the first BFR-ID of a first BFER; determining, when it is determined that there is the second BFR-ID, a target bit-forwarding router-prefix (BFR-Prefix) from a first BFR-Prefix corresponding to the first BFR-ID and a second BFR-Prefix corresponding to the second BFR-ID; and generating the target forwarding table on the basis of the target BFR-Prefix. The present solves the problems of unnecessary occupation of network bandwidth, overload of devices, and packet loss due to an excessively large amount of advertisement existing in existing technology.

## Description

### Technical Field

Embodiments of the present invention relate to the field of communications, and in particular, to method and apparatus for generating forwarding table, storage medium and electronic apparatus.

### Background

BIER (Bit Indexed Explicit Replication) (RFC8279) is a novel multicast data forwarding technology, in which a node on a network edge is represented by only one BIT, multicast traffic is transmitted in an intermediate network, and a specific BIER header is additionally encapsulated. Such a packet header labels all destination nodes BFERs (Bit-Forwarding Egress Routers) of the multicast stream in the form of BIT bitstrings, wherein an intermediate network forwarding node performs routing according to the bit, so as to ensure that traffic can be sent to all the destination nodes. An intermediate node forwarding device forms a table for guiding BIER forwarding in advance via a routing protocol, and when receiving traffic encapsulated with a BIER header, the forwarding of the packet to the destination nodes is completed according to a BIFT (Bit Index Forwarding Table). An ingress node BFIR (Bit-Forwarding Ingress Router) of a BIER domain encapsulates multicast traffic entering the BIER domain as a payload of the BIER header, and after forwarding via the intermediate node, an egress node BFER of the BIER domain receives the BIER packet, and after stripping the BIER header, the Payload is forwarded to a corresponding receiver. A data plane forwarding technology such as BIER does not have the problem of establishing a multicast tree, the delay of establishing a multicast tree is eliminated; and when a link or node problem occurs in the network, the convergence speed is the same as that of an OSPF (Open Shortest Path First) or ISIS (Intermediate System-to-Intermediate System) protocol, which reduces a huge delay compared with original multicast tree reestablishment.

For the ingress device BFIR of the BIER domain, when a certain piece of multicast traffic needs to be transmitted, it is necessary to know which egress devices BFERs (Bit-Forwarding Ingress Routers) of the BIER domain require the multicast traffic; therefore, signaling interaction needs to be performed between the BFIR and the BFERs, and the technology of signaling interaction is referred to as a BIER Overlay technology. Intermediate BFR (Bit-Forwarding Router) devices simply used for BIER forwarding do not need to know information of the multicast traffic.

In order to construct BIER forwarding table entries, protocols such as OSPF or ISIS will support BIER information advertisement by signaling extension, all nodes in the BIER domain will receive BIER information of other nodes, and construct the BIER forwarding table entries on this basis; and the protocols such as OSPF or ISIS for supporting BIER information interaction by signalling extension are referred to as a BIER Underlay technology.

In addition to performing advertisement by using protocols such as OSPF and ISIS, the BIER underlay technology may also perform advertisement by using protocols such as BGP (Border Gateway Protocol) and BABEL, etc.

In existing technology, when protocols such as OSPF and ISIS are used to advertise BIER information by extension, main content of the advertisement includes a routing prefix and a BFR-ID (BFR-Identifier), etc., for example, according to the definition of RFC8444, the OSPF may carry information such as BFR-ID in a manner of adding BIER SUB-TLV when the routing prefix is advertised; and after the protocol is subjected to routing computation according to the prefix, the BIER forwarding table entries are then correctly generated according to the two.

By means of a flooding mechanism of the OSPF protocol, after receiving advertisement from another device, a device in the network performs routing computation according to prefix information received, so as to generate a unicast routing table for ordinary forwarding, and then generate a BIER routing table for BIER forwarding.

It should be noted that, the way of generating a routing table in existing technology will lead to route leakage, such that routes that do not need to completely learn from each other in different domains are also completely learned by devices in various domains, thereby causing a huge amount of advertisement, causing unnecessary occupation of network bandwidth, and increasing the burden of devices. In addition, a problem of packet loss also easily occurs due to the excessive hige amount of advertisement.

Aiming at the described problems existing in existing technology, no effective solution has been proposed at present.

### Summary

Embodiments of the present invention provide a method and apparatus for generating forwarding table, a storage medium, and an electronic apparatus, so as to at least solve the problems of unnecessary occupation of network bandwidth, overload of devices, and packet loss due to an excessively large amount of advertisement in existing technology.

According to an embodiment of the present invention, providing a method for generating forwarding table, including: when a target forwarding table is to be generated on the basis of a received first advertisement message, judging whether there is a second bit-forwarding router-identifier (BFR-ID) same as a first BFR-ID in existing BFR-IDs in the target forwarding table, wherein the first advertisement message is used for advertising the first BFR-ID of a first BFER; when it is determined that there is the second BFR-ID, a target bit-forwarding router-prefix (BFR-Prefix) is determined from a first BFR-Prefix corresponding to the first BFR-ID and a second BFR-Prefix corresponding to the second BFR-ID; and the target forwarding table is generated on the basis of the target BFR-Prefix.

According to another embodiment of the present invention, providing an apparatus for generating forwarding table, including: a judgment module, configured to judge, when a target forwarding table is to be generated on the basis of a received first advertisement message, whether there is a second bit-forwarding router-identifier (BFR-ID) same as a first BFR-ID in existing BFR-IDs in the target forwarding table, wherein the first advertisement message is used for advertising the first BFR-ID of a first BFER; a determination module, configured to determine, when it is determined that there is the second BFR-ID, a target bit-forwarding router-prefix (BFR-Prefix) from a first BFR-Prefix corresponding to the first BFR-ID and a second BFR-Prefix corresponding to the second BFR-ID; and a generation module, configured to generate the target forwarding table on the basis of the target BFR-Prefix.

According to an embodiment of the present invention, further providing a computer-readable storage medium, the computer-readable storage medium storing a computer program, and the computer program is configured to, when executed by a processor, implement the steps in the described method embodiment.

According to an embodiment of the present invention, further providing an electronic apparatus, including a memory and a processor, wherein the memory stores a computer program, and the processor is configured to execute the computer program to implement the steps in the described method embodiment.

### Brief Description of the Drawings

Fig. 1 is a network architecture diagram I in existing technology;
Fig. 2 is a schematic diagram of a BIER forwarding table on a BFR1 in existing technology;
Fig. 3 is a schematic diagram of an ordinary forwarding table in existing technology;
Fig. 4 is a network architecture diagram II in existing technology;
Fig. 5 is a schematic diagram of a unicast routing table in existing technology;
Fig. 6 is a schematic diagram I of a BIER forwarding routing table in existing technology;
Fig. 7 is a schematic diagram of a unicast routing table on a BFRm of domain2 in existing technology;
Fig. 8 is a schematic diagram II of a BIER forwarding routing table in existing technology;
Fig. 9 is a structural block diagram of hardware of a mobile terminal for a method for generating a forwarding table according to embodiments of the present invention;
Fig. 10 is a flowchart of a method for generating a forwarding table according to embodiments of the present invention;
Fig. 11 is a schematic diagram I of the format of out-of-domain SUB-SUB-TLV according to embodiments of the present invention;
Fig. 12 is a schematic diagram II of the format of out-of-domain SUB-SUB-TLV according to embodiments of the present invention;
Fig. 13 is a schematic diagram of a format when out-of-domain SUB-SUB-TLV independently carries a DOMAIN-ID according to embodiments of the present invention;
Fig. 14 is a schematic diagram I of a format when out-of-domain SUB-SUB-TLV carries a DOMAIN-ID according to embodiments of the present invention;
Fig. 15 is a schematic diagram II of a format when out-of-domain SUB-SUB-TLV carries a DOMAIN-ID according to embodiments of the present invention;
Fig. 16 is a schematic diagram of an overall flowchart of a device generating a BIER forwarding table according to embodiments of the present invention;
Fig. 17 is a schematic diagram of a unicast routing table according to Specific Embodiment I of the present invention;
Fig. 18 is a schematic diagram of a BIER forwarding table according to Specific Embodiment I of the present invention;
Fig. 19 is a schematic diagram of a unicast routing table according to Specific Embodiment II of the present invention;
Fig. 20 is a schematic diagram I of a BIER forwarding table according to Specific Embodiment II of the present invention;
Fig. 21 is a schematic diagram II of a BIER forwarding table according to Specific Embodiment II of the present invention;
Fig. 22 is a schematic diagram of a unicast routing table according to Specific Embodiment III of the present invention;
Fig. 23 is a network architecture diagram according to Specific Embodiment IV of the present invention;
Fig. 24 is a schematic diagram of a unicast routing table according to Specific Embodiment IV of the present invention;
Fig. 25 is a schematic diagram of a BIER forwarding table according to Specific Embodiment IV of the present invention;
Fig. 26 is a structural block diagram of an apparatus for generating forwarding table according to embodiments of the present invention.

### Detailed Description of the Embodiments

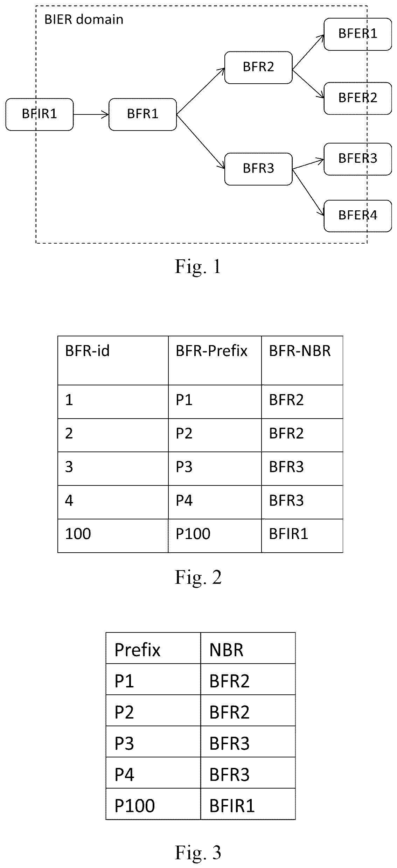

First, related technologies involved in embodiments of the present invention are described:
When protocols such as OSPF and ISIS are used to advertise BIER information by extension, main content of the advertisement includes a routing prefix and a BFR-ID, etc.; for example, according to the definition of RFC8444, the OSPF may carry information such as the BFR-ID in a manner of adding BIER SUB-TLV when the routing prefix is advertised; and after the protocol is subjected to routing computation according to the prefix, BIER forwarding table entries are then correctly generated according to the two. Taking Fig. 1 as an example, an edge device in the network includes a BFIR and several BFERs: BFER1 to BFERn, and the edge device advertises a BFR-ID thereof together with corresponding Sub-Domain, BFR-Prefix, etc., in which the Prefix is usually taken from a Loopback address of the device so as to uniquely identify one device in the network; and in the same domain, BFR-IDs and BFR-Prefixes (the BFR-Prefix being a Loopback prefix address of a device) are in one-to-one correspondence. Assuming that the OSPF protocol performs advertisement according to RFC8444, the BFR-Prefix is advertised via Extended Prefix TLV of the OSPF, and BIER SUB-TLV is added under this prefix to carry information such as Sub-Domain-ID and BFR-ID; and intermediate devices BFRs of the network may also perform advertisement according to this protocol extension, but since the intermediate device BFRs are not assigned with BFR-IDs, BFR-IDs advertised thereby are 0. In the example of Fig. 1, assume that the BFR-ID of BFIR1 is 100, and the BFR-Prefix thereof is P100; the BFR-ID of BFER1 is 1, and the BFR-Prefix thereof is P1; the BFR-ID of BFER2 is 2, and the BFR-Prefix thereof is P2; and so on, it is assumed that all of the BFR-IDs are in a sub-Domain 0.

By means of a flooding mechanism of the OSPF protocol, after receiving advertisement from another device, a device in the network performs routing computation according to prefix information received, so as to generate a unicast routing table for ordinary forwarding, and then generate a BIER routing table for BIER forwarding. As described in RFC8279, a BIER forwarding table is indexed by the BFR-ID, and includes table entries of BFR-prefix and a next-hop neighboring BFR-NBR. For example, Fig. 2 shows a BIER forwarding table on the BFR1, and before generating the table, the BFR1 needs to generate an ordinary forwarding table as shown in Fig. 3 according to OSPF advertisement received. The ordinary forwarding table is used for unicast route forwarding, and the table is generated by taking the prefix as an index; for example, for the prefix P1 advertised by BFER1, a next-hop device corresponding to the route is calculated as BFR2, and then BIER SUB-TLV carried in the advertisement TLV corresponding to the route is extracted, a BFR-ID value included therein is used as an index and added to the BIER forwarding table, and so on, until the forwarding table in Fig. 2 is generated.

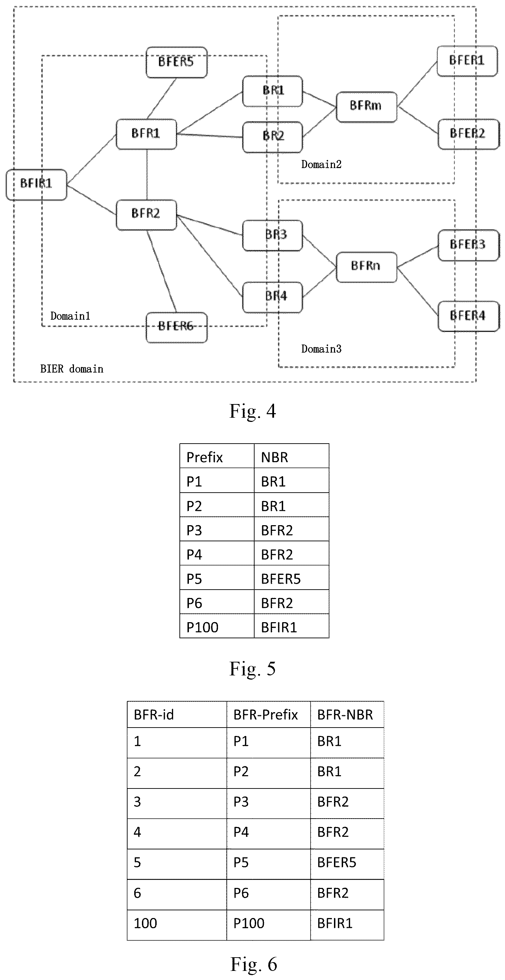

When a BIER domain consists of a plurality of IGP domains or AS domains (the domain herein does not have the same meaning as the Sub-Domain in the BIER advertisement as mentioned above), as shown in the network in Fig. 4, the BIER domain consists of three domains, and there will be running protocols in each individual domain, such as OSPF, ISIS, BGP, etc., and the running protocols in various domains may be the same or different. For example, the BGP protocol may run in domain1, and the OSPF protocol may run in domain2 and domain3; or, the OSPF protocol runs in domain1, the BGP protocol runs in domain2, and the ISIS protocol runs in domain3, and so on. The advertisement range of the protocol in each domain is only within the domain. Assume that multicast traffic needs to be sent from the BFIR1 device to BFER1-BFER6, in addition to establishing a forwarding table in the domain of the device itself, the device also needs to establish a forwarding table which can reach receivers in other domains.

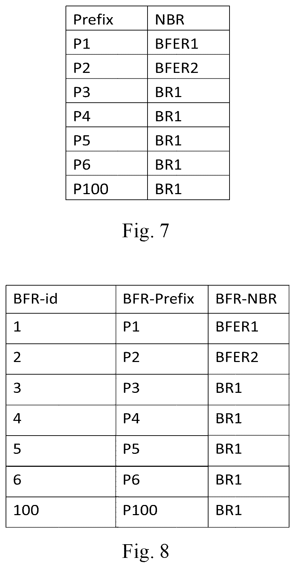

Boundary devices of the Domain, such as BR1-BR4 in Fig. 4, need to be used as bridges to transmit BFR-ID information in different domains. For example, BR1/BR2 needs to advertise BFR-IDs of BFER1 and BFER2 in the domain2 to the domain1, and advertise to the domain2 BFR-IDs of BFER3 and BFER4 in the domain3 and BFR-IDs of BFER5 and BFER6 in the domain1 which are received from BR3/BR4. Similarly, BR3/BR4 needs to advertise BFR-IDs of BFER3 and BFER4 in the domain3 to the domain1, and advertise to the domain3 BFR-IDs of BFER1 and BFER2 in the domain2 and BFR-IDs of BFER5 and BFER6 in the domain1 which are received from BR1/BR2. In order to achieve the purpose, one implementation is: prefixes of the BFIR/BFERs, that is, loopback addresses thereof, are directly advertised on boundary devices of the Domain. That is to say, the BR1/BR2 directly advertises to the domain1 a BFR-Prefix of the BFER1 and a BFR-ID thereof and a BFR-Prefix of the BFER2 and a BFR-ID thereof in the domain2; directly advertises to the domain2 a BFR-Prefix of the BFER5 and BFR-ID thereof, a BFR-Prefix of the BFER6 and BFR-ID thereof, and a BFR-Prefix of the BFIR1 and BFR-ID thereof in the domain1; and directly advertises to the domain2 a BFR-Prefix of the BFER3 and BFR-ID thereof and a BFR-Prefix of the BFER4 and BFR-ID thereof which are acquired from the BR3/BR4; and so on. In this way, in each domain, in addition to information of the BFER1 and the BFER2 in the present domain, the BFR-Prefixes and BFR-IDs of BFER devices in other domains can also be received. Taking the BFR1 as an example, a unicast routing table in Fig. 5 may be calculated, and a BIER forwarding routing table in Fig. 6 is generated accordingly; and by the same reasoning, a unicast routing table on BFRm of the domain2 is as shown in Fig. 7, and a BIER forwarding routing table is as shown in Fig. 8.

The advantages of such a method are simple and direct, but the disadvantages thereof are also obvious. First, route leakage occurs between domains, for example, the prefixes of two BFER devices in the domain2 exist in both domain1 and domain3, and actually all routes in different domains do not need to be learned from each other completely. Secondly, assuming that the number of BFIR/BFER devices is huge, the burden of devices is heavy, and assuming that each domain has 200 edge devices, then BFR-Prefixes and BFR-IDs of a total of 600 edge devices in the three domains will be advertised in each domain; in addition to occupying network bandwidth and affecting all devices (for example, flooding of an OSPF device and an ISIS device), the huge amount of advertisement also causes great burden on device calculation, as each device needs to calculate 600 unicast routes first, and then can generate a BIER forwarding table for forwarding. The BR1-BR4 as boundary devices need to be used as bridges to advertise all BFR-Prefixes and corresponding BFR-IDs thereof, and the advertisement amount of the devices is too large, which is likely to cause problems such as packet loss, etc.

In view of the problems above, embodiments of the present invention provide a method for generating forwarding table. Hereinafter, embodiments of the present invention are described in detail with reference to the accompanying drawings and in conjunction with the embodiments.

It is to be noted that the terms "first", "second", etc. in the description, claims and drawings of embodiments of the present invention are used to distinguish similar objects, and are not necessarily used to describe a specific sequence or a precedence order.

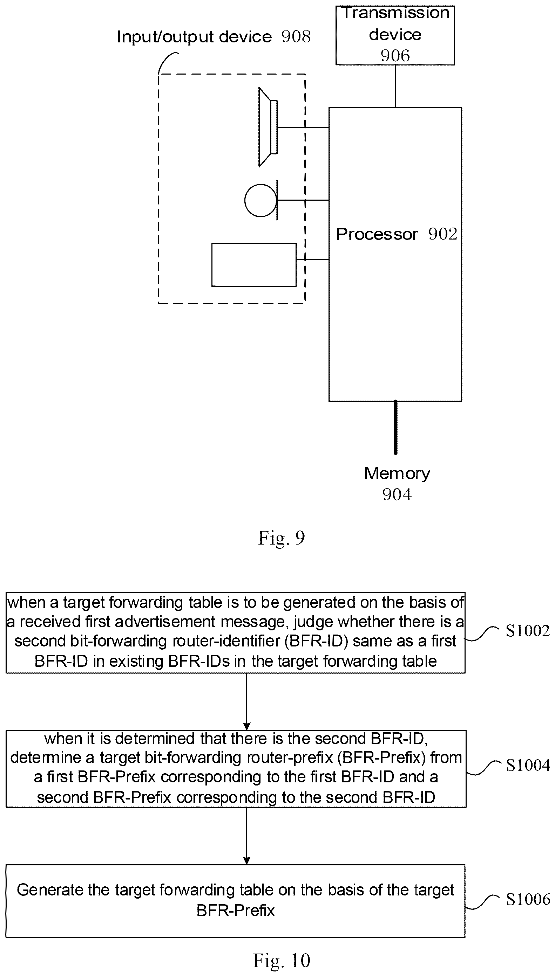

Method embodiments provided in the embodiments of the present invention can be executed in a mobile terminal, a router or a switch, a computer terminal, or a similar computing apparatus. Taking the method embodiments being executed on a mobile terminal as an example, Fig. 9 is a structural block diagram of hardware of a mobile terminal for a method for generating a forwarding table according to embodiments of the present invention. As shown in Fig. 9, the mobile terminal may include: one or more (Fig. 9 shows only one) processors 902 (the processors 902 may include, but not limited to processing apparatus such as a micro processor, MCU or a programmable logic device, FPGA); and a memory 904 for storing data; wherein the mobile terminal can further include a transmission device 906 and an input/output device 908 for communication functions. A person of ordinary skill in the art would understand that the structure as shown in Fig. 9 is merely exemplary, and does not limit the structure of the mobile terminal. For example, the mobile terminal may also include more or fewer assemblies than those shown in Fig. 9, or have different configuration from that shown in Fig. 9.

The memory 904 may be used for storing a computer program, for example, a software program and module of application software, such as a computer program corresponding to the method for generating a forwarding table in embodiments of the present invention; and the processor 902 executes various functional applications and data processing by running the computer program stored in the memory 904, i.e. implementing the described method. The memory 904 may include a high-speed random access memory, and may also include a non-transitory memory, such as one or more magnetic storage apparatuses, flash memories or other non-transitory solid-state memories. In some examples, the memory 904 may further include memories remotely arranged with respect to the processors 902, and these remote memories may be connected to the mobile terminal via a network. Examples of the network include, but are not limited to the Internet, an intranet, a local area network, a mobile communication network and combinations thereof.

The transmission apparatus 906 is configured to receive or send data via a network. Specific examples of the network may include a wireless network provided by a communication provider of the mobile terminal. In one example, the transmission apparatus 906 includes a network adapter (Network Interface Controller, NIC) which may be connected to other network devices by means of a base station, thereby being able to communicate with the Internet. In one example, the transmission apparatus 906 may be a Radio Frequency (RF) module which is configured to communicate with the Internet in a wireless manner.

The present embodiment provides a method for generating forwarding table which can run in the described terminal, but is not limited thereto. Fig. 10 is a flowchart of a method for generating forwarding table according to embodiments of the present invention. As shown in Fig. 10, the flow includes the following steps:
At S1002: when a target forwarding table is to be generated on the basis of a received first advertisement message, judging whether there is a second bit-forwarding router-identifier (BFR-ID) same as a first BFR-ID in existing BFR-IDs in the target forwarding table, wherein the first advertisement message is used for advertising the first BFR-ID of a first BFER;
At S1004: when it is determined that there is the second BFR-ID, a target bit-forwarding router-prefix (BFR-Prefix) is determined from a first BFR-Prefix corresponding to the first BFR-ID and a second BFR-Prefix corresponding to the second BFR-ID; and
At S1006: the target forwarding table is generated on the basis of the target BFR-Prefix.

The execution subject of the steps may be a BFR device in a BIER domain, and certainly, may also be other devices in the BIER domain, or may also be a processor independent of the BFR device, or may also be other processing devices having similar processing capability, etc.

In the embodiments above, in the case that no BFR-ID entry same as the first BFR-ID exists, an entry corresponding to the first BFR-ID is directly added into the forwarding table, and the corresponding prefix and next hop are filled in. in the case that there are entries corresponding to the same BFR-ID, a final routing prefix needs to be determined from the plurality of routing prefixes corresponding to the same BFR-ID, and then the entry in the forwarding table is adjusted on the basis of the final routing prefix. It should be noted that, in the case that the finally determined routing prefix is a routing prefix corresponding to the second BFR-ID, it is not necessary to adjust the entries in the forwarding table; and in the case that the finally determined routing prefix is a routing prefix corresponding to the first BFR-ID, it is necessary to update the routing prefix and next hop which correspond to the first BFR-ID in the forwarding table to the routing prefix and next hop which correspond to the first BFR-ID.

By the embodiments above, when the forwarding table is to be generated, in the case that a plurality of same BFR-IDs exist, prefixes of the same BFR-IDs are compared, and then, a more proper prefix corresponding to the BFR-ID is determined, thereby preventing repeated establishment of a plurality of forwarding entries corresponding to the same BFR-ID in the forwarding table, avoiding problems of unnecessary occupation of network bandwidth, overload of devices and packet loss due to an excessively large amount of advertisement, thereby achieving the effects of increasing the network bandwidth utilization and reducing the device load.

In an optional embodiment, when the target BFR-Prefix is determined from a plurality of BFR-Prefixes corresponding to the same BFR-ID, the target BFR-Prefix may be determined comprehensively on the basis of content contained in various BFR-Prefixes corresponding to the BFR-ID. Hereinafter, how to comprehensively determine the target BFR-Prefix is described below:

### Determination Mode I:

First content included in the first BFR-Prefix is compared with second content included in the second BFR-Prefix; when it is determined that the first content is more detailed than the second content, the first BFR-Prefix is determined as the target BFR-Prefix; and when it is determined that the second content is more detailed than the first content, the second BFR-Prefix is determined as the target BFR-Prefix.

In this determination mode, a BFR-Prefix having more detailed content is preferentially selected as the target BFR-Prefix, wherein the content being more detailed may refer to more content contained in the BFR-Prefix, and specifically, the prefix mask length of the BFR-Prefix is longer.

### Determination Mode II:

First attribute information of the first BFR-Prefix is compared with second attribute information of the second BFR-Prefix; when it is determined that an attribute value of the first attribute information is superior to an attribute value of the second attribute information, the first BFR-Prefix is determined as the target BFR-Prefix; and when it is determined that an attribute value of the second attribute information is superior to an attribute value of the first attribute information, the second BFR-Prefix is determined as the target BFR-Prefix.

In this determination mode, the attribute information of the BFR-Prefix may include one or more of a cost attribute, a metric attribute or other attributes of the BFR-Prefix, wherein a superior attribute value may be a value of the cost attribute being smaller, a value of the metric attribute being smaller, or the like.

In an optional embodiment, the target forwarding table is generated on the basis of the target BFR-Prefix, includes: in a case that the target BFR-Prefix is the first BFR-Prefix, the second BFR-Prefix corresponding to the second BFR-ID and a next-hop device which already exist in the target forwarding table are updated to the first BFR-Prefix and a next-hop device corresponding to the first BFR-Prefix; and in a case that the target BFR-Prefix is the second BFR-Prefix, the second BFR-ID and the second BFR-Prefix corresponding to the second BFR-ID and the next-hop device which already exist in the forwarding table maintain unchanged. In this embodiment, when it is determined that there is no need to update entries already existing in the forwarding table, the first BFR-Prefix may be directly discarded.

In an optional embodiment, in a case that the first advertisement message further includes first-domain identifier DOMAIN-ID information of a domain where the first BFER is located, after determining that there is the second BFR-ID same as the first BFR-ID in existing BFR-IDs in the target forwarding table, the method further includes: when it is determined that either or both of the BFR-Prefixes respectively corresponding to the first BFR-ID and the second BFR-ID comes/come from within the domain, error handling is executed; and when it is determined that the BFR-Prefixes respectively corresponding to the first BFR-ID and the second BFR-ID are both from the outside of the domain, second DOMAIN-ID information of a domain where a second BFER is located which is carried in a second advertisement message for advertising the second BFR-ID is determined, and when the first DOMAIN-ID information is different from the second DOMAIN-ID information, error handling is executed. In this embodiment, when it is determined that BFR-Prefixes respectively corresponding to the same BFR-ID are from different domains, it indicates that configuration error occurs, and it is necessary to stop updating the forwarding table and execute error handling.

In an optional embodiment, the second advertisement message includes second out-of-domain TLV, wherein the second out-of-domain TLV carries second BFR-ID information; or, the second out-of-domain TLV carries the second BFR-ID information and the second DOMAIN-ID information of the domain where the second BFER is located. In this embodiment, the second out-of-domain TLV is TLV additionally added in the advertisement message, or newly added TLV of a new type in original TLV. Under different protocols, formats of the newly added TLV are different. For example, under the OSPF protocol, when advertising an out-of-domain BFR-ID, a boundary device performs advertisement in the form of new out-of-domain SUB-TLV or out-of-domain SUB-SUB-TLV (TLV: Type, Length, Value), etc.

In an optional embodiment, the second advertisement message includes the second BFR-Prefix, and the second out-of-domain TLV is sent following the second BFR-Prefix, wherein the second BFR-Prefix includes one of: an aggregate routing prefix, a default routing prefix, and a BFR-Prefix of a boundary device. In this embodiment, the second advertisement message may carry domain DOMAIN-ID information; the out-of-domain SUB-TLV/out-of-domain SUB-SUB-TLV may be advertised following the aggregate or default routing prefix, or be advertised following the BFR-Prefix of the boundary device.

In an optional embodiment, the first advertisement message includes first out-of-domain TLV, wherein the first out-of-domain TLV carries first BFR-ID information; or, the first out-of-domain TLV carries the first BFR-ID information and the first DOMAIN-ID information of the domain where the first BFER is located. In this embodiment, the first out-of-domain TLV is TLV additionally added in the advertisement message, or newly added TLV of a new type in original TLV. Under different protocols, formats of the newly added TLV are different. For example, under the OSPF protocol, when advertising an out-of-domain BFR-ID, a boundary device performs advertisement in the form of new out-of-domain SUB-TLV or out-of-domain SUB-SUB-TLV (TLV: Type, Length, Value), etc.

In an optional embodiment, the first advertisement message includes the first BFR-Prefix, and the first out-of-domain TLV is sent following the first BFR-Prefix, wherein the first BFR-Prefix includes one of: an aggregate routing prefix, a default routing prefix, and a BFR-Prefix of a boundary device. In this embodiment, the first advertisement message may carry domain DOMAIN-ID information; wherein the out-of-domain SUB-TLV/out-of-domain SUB-SUB-TLV may be advertised following the aggregate or default routing prefix, or be advertised following the BFR-Prefix of the boundary device.

In an optional embodiment, error handling is executed, includes at least one of: an alarm prompt is performed to prompt that a problem exists in current network deployment; and alarm information is sent to a controller, to indicate that a problem exists in current network deployment of the controller. In this embodiment, in addition to the specific methods above, error handling may also be other handling methods, for example, sending error report information to a specific device, or sending error report information to a terminal of an administrator, and the error handling manners are not limited thereto.

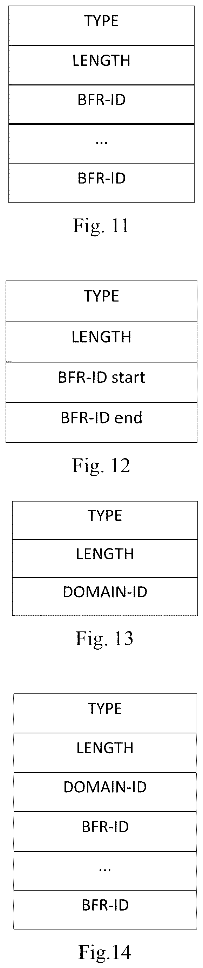

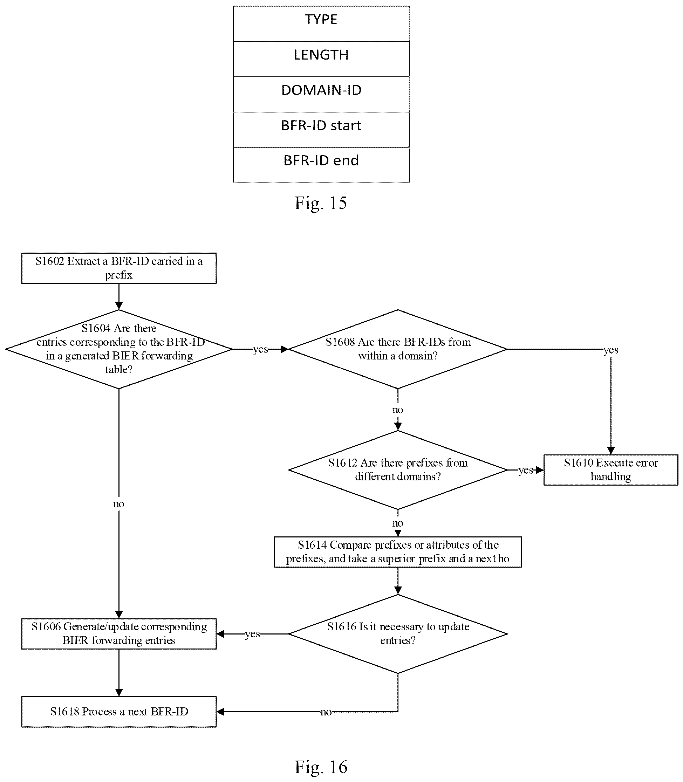

Hereinafter, embodiments of the present invention will be described with reference to an integral embodiment:
A boundary device is configured to advertise out-of-domain SUB-SUB-TLV, which indicates a prefix of advertisement to be followed, the format thereof is similar to that shown in Fig. 11, and BFR-IDs to be carried can be listed; when BFR-IDs are a group of continuous values, a format similar to that in Fig. 12 can be used to fill in a start value and an end value of a BFR-ID to be advertised; moreover, a DOMAIN-ID value may be optionally carried separately, as shown in Fig. 13. The DOMAIN-ID value may also be directly carried in the same SUB-SUB-TLV, and therefore may also be carried in manners similar to those in Figs. 14 and 15.

An overall process of a device generating a BIER forwarding table is shown in Fig. 16, and specifically includes the following steps:
S1602: a BRF-ID carried in a prefix is extracted;
S1604: when calculating and generating a BIER forwarding table, the device searches for whether there are entries of a BFR-ID which is the same as the extracted BRF-ID;
S1606: in the case that there is no entry with the same BFR-ID, the entry is directly added and the corresponding prefix and next hop are filled in, and proceed to S1620;
S1608: in the case that there are entries with the same BFR-ID, it is judged whether there is a prefix thereof from within a domain (it is judged whether the prefix is carried in BIER SUB-TLV);
S1610: in the case that there is a prefix from within a domain, then error handling is executed, which includes alarm prompt or reporting to a controller;
S1612: in the case that there is a prefix from the outside the domain, it is judged whether various prefixes come from different domains, and in the case that they are from different domains, execute S1610;
S1614: in the case that the prefixes are from the same domain, then prefixes corresponding to entries of the same BFR-ID are compared, and a next hop corresponding to a more detailed prefix is selected, wherein more detailed means that the prefix has a longer mask length; or other attributes such as cost/metric of the prefixes are compared, and a superior (for example, having smaller cost/metric) prefix and a corresponding next hop thereof are selected; the attributes may also be compared separately, that is, after step 1612, other attributes such as cost/metric, etc. of the prefixes are compared directly by skipping the comparison of the detailed degree of the prefixes;
S1616: on the basis of the comparison result, it is determined whether entries in the forwarding table need to be updated, and in the case that it is determined that update is needed, proceed to S1606; otherwise, proceed to S1618; and
S1618: process a next BFR-ID.

Hereinafter, embodiments of the present invention will be described exemplarily in conjunction with specific embodiments:

### Specific Embodiment I:

In order to reduce the burden of devices of the entire network, when boundary devices advertise BFR-IDs, some means may be adopted to reduce the number of prefixes advertised, for example, an advertisement method of aggregate routing or default routing is used. In these methods, an aggregated prefix may cover prefixes of one or more boundary devices, a default routing prefix will include prefixes of all boundary devices, and therefore the prefixes may correspond to a plurality of BFR-IDs, and the prefixes are no longer in one-to-one correspondence with the BFR-IDs. However, for the same domain, the prefixes and the BFR-IDs are still in one-to-one correspondence, and therefore advertisement of BFR-IDs of other domains must be distinguished from advertisement of BFR-IDs in the present domain. Therefore, when BFR-IDs of other domains are advertised, they need to be carried by using new TLV rather than original BIER SUB-TLV, or carried by newly adding SUB-SUB-TLV of a new type under the original BIER SUB-TLV, which is referred to as out-of-domain SUB-SUB-TLV for short herein.

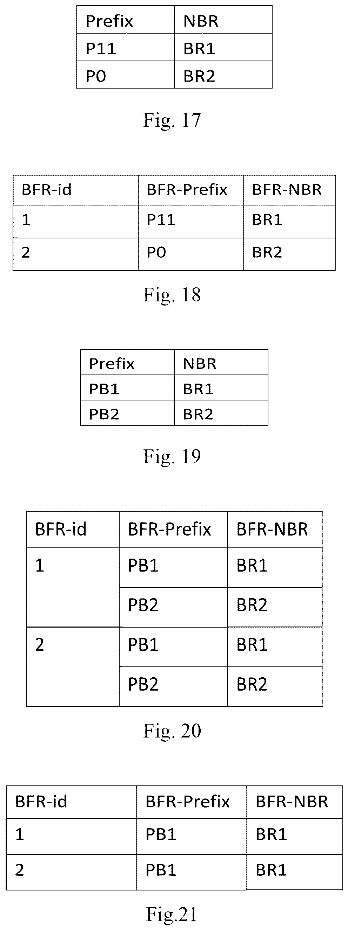

For example, in Fig. 4, in order to reduce the number of prefixes to be advertised and to achieve certain control on traffic, for example, when expecting to enable traffic sent to BFER1 to pass through BR1, the boundary devices can select an aggregate routing (assuming that the prefix thereof is P11) configured on BR1 when BFR-IDs of the domain2 are advertised to the domain1. Assuming that P11 merely contains the prefix of the BFER1, in this way, the BR1 only carries BFR-ID 1 of the BFER1 when advertising the prefix P11. Assuming that a default routing (0/0 routing, which is referred to as P0 for convenience) is configured on BR2 and includes all routing prefixes of the domain2, when the BR2 advertises P0 to the domain1, BFR-ID 1/2 of the BFER1 and BFER2 will be carried. When devices of the domain1 perform routing computation, the BFR1 is still taken as an example, unicast routing of P11 and P0 is generated, a next hop of P11 is the BR1, and a next hop of P0 is the BR2, as shown in Fig. 17 (other routing entries are omitted for simplicity).

Next, a BIER forwarding table is calculated, assuming that BFR-ID information carried by the P11 prefix is processed first, since the BFR-ID carried by P11 is only 1, a BIER forwarding table entry with the BFR-ID being 1, the prefix being P11 and the next hop being BR1 will be generated. When the default routing P0 is processed, it is found that BFR-IDs carried thereby are 1 and 2, and the advertisement of the BFR-IDs of both the two prefixes is in the form of out-of-domain SUB-SUB-TLV; and at this time, the default routing cannot be processed directly according to the original processing principle; otherwise, entries of the BFR-ID 1 in the BIER forwarding table will be updated to having a prefix P0 and a next hop BR2. This cannot achieve the original control object. Therefore, when the default routing P0 is processed and it is found that the BFR-ID 1 carried thereby already exists in the BIER forwarding table, the routing prefix P0 needs to be compared with the prefix P11 in the original BFR-ID 1, and it is found that P11 is more detailed (the mask length thereof is longer), so it is unnecessary to update entries of the BFR-ID 1, and thus the finally generated BIER forwarding table is similar to that as shown in Fig. 18 (other entries are omitted for simplicity).

### Specific Embodiment II:

For advertisement of boundary devices, a method of further reducing the prefixes to be advertised may also be adopted, that is, when advertising BFR-Prefixes of the boundary devices themselves, BFR-IDs of other domains are carried by directly carrying out-of-domain SUB-SUB-TLV. For example, as shown in Fig. 4, assume that the prefix of BR1 is PB1 and the prefix of BR2 is PB2, when BFR-IDs of the domain2 are advertised to the domain1, for the same prefix BFR-Prefix, in addition to advertising the BIER SUB-TLV in the present domain, out-of-domain SUB-SUB-TLV also needs to be carried. Therefore, when the BR1 advertises its prefix PB1, the BR1 also needs to carry out-of-domain SUB-SUB-TLV to carry the BFR-ID 1/2 of the domain2; and the same applies to the BR2 device.

In this way, when devices within a domain perform calculation, the BFR1 is still taken as an example, a prefix-based unicast routing table is first calculated, as shown in Fig. 19. When generating a BIER forwarding table, firstly, the BFR-ID 1/2 carried by the PB1 prefix is extracted, and two BIER forwarding entries, in which the BFR-IDs are respectively 1 and 2, the prefixes are both PB1, and the next hops are both BR1, are generated. When the BFR-IDs carried by the PB2 is processed, it is found that corresponding entries already exist in the BIER forwarding table, and when the prefixes PB2 and PB1 are compared, it is found that the detailed degree of the two may be the same (for example, in a case that the prefixes are IPv4, the prefixes are both 32-bit host routes; and in a case that the prefixes are IPv6, the prefixes are both 128-bit host routes). At this time, an ECMP (Equal-cost multipath) link may be selected to be directly generated, which is similar to that as shown in Fig. 20. Other OSPF protocol attributes such as cost/metric of the two prefixes may also be selected for comparison (these attributes are advertised on the basis of other TLV of the prefixes and do not necessarily exist in BIER SUB-TLV or out-of-domain SUB-SUB-TLV). Assuming that the attributes such as cost/metric of the prefix PB1 are superior to those of the prefix PB2, the finally generated BIER forwarding table is as shown in Fig. 21.

### Specific Embodiment III:

A problem may occur in network deployment. Still take the network in Fig. 4 as an example, it is assumed that due to deployment error of a network administrator, BFR-IDs allocated to devices BFER5 and BFER1 are both 50, the BFER5 device advertises its own prefix P5 and BFR-ID 50 in the domain1, and the BFER1 device advertises its own prefix P1 and BFR-ID 50 in the domain2. When the boundary device BR1 advertises the BFR-IDs in the domain2 to the domain1, it is assumed that advertisement is performed as out-of-domain SUB-SUB-TLV of the PB1 prefix of the BR1; likewise, the advertisement from the domain1 to the domain2 is similar, and will not be repeated herein.

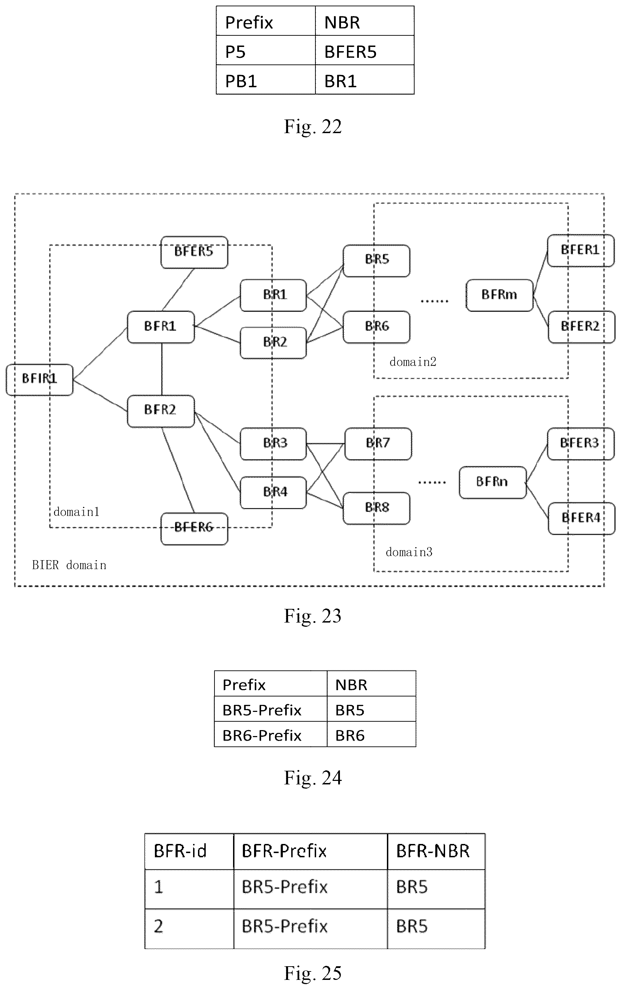

When the devices perform routing computation, the BFR1 is still taken as an example, the BFR1 first generates an ordinary unicast routing table, and the generated next hops to the prefixes P5 and PB1 are BFER5 and BR1 respectively, as shown in Fig. 22. Further, assume that BIER SUB-TLV carried by the route of the prefix P5 is first extracted, to obtain a BIER forwarding entry with a BFR-ID of 50, a prefix of P5 and a next hop of BFER5. When the BIER SUB-TLV and out-of-domain SUB-SUB-TLV carried by the prefix PB1 are processed, the BFR-ID 50 is found, by looking up the BIER forwarding table, it is found that an entry of the BFR-ID already exists, and the source thereof is intra-domain BIER SUB-TLV of the prefix P5. At this time, it indicates that an error occurs, update of the BIER forwarding entry needs to be stopped, and the error is displayed by means of an alarm or error information, or is reported to a controller, so as to prompt a problem occurring in network deployment.

It should be noted that the advertisement in the foregoing embodiments is performed by taking the OSPF protocol as an example. In the case that the advertisement is performed via an ISIS protocol, BIER Info SUB-TLV of the ISIS protocol corresponds to the BIER SUB-TLV of the OSPF protocol, and the corresponding out-of-domain SUB-SUB-TLV may be added under the BIER Info SUB-TLV. In the case that the advertisement is performed via a BGP protocol, BIER TLV corresponds to the BIER SUB-TLV of the OSPF protocol, and out-of-domain advertisement that can be added under the BIER TLV is the out-of-domain SUB-TLV mode. The embodiments of the present invention do not specifically limit the advertisement position.

### Specific Embodiment IV:

When there is a scenario in which a plurality of AS domains belong to the same BIER domain, for example, in the network as shown in Fig. 23, similarly, three domains combine the same BIER domain, wherein domain1/2/3 represent three AS domains, respectively. A BGP protocol runs between boundary devices of each domain, for example, between BR1/2 of the domain1 and BR5/6 of the domain2, and between BR3/4 of the domain1 and BR7/8 of the domain3. However, inside each domain, an OSPF protocol or an ISIS protocol may run, or a BGP protocol may also run.

It is assumed that an OSPF protocol runs in the domain2, and an ISIS protocol runs in the domain1. Taking boundary devices BR5/6 as an example, assuming that BR5/6 is configured to publish BFR-ID information in the domain2 to BR1/2 device, BR5 first advertises BFR-ID information of BFER1/2 acquired from the OSPF protocol along with its own device prefix as out-of-domain SUB-TLV under its BIER TLV, sets the next hop as itself, and sends the information to the BR1 and BR2 devices; and the BR6 device also performs advertisement in this way. After receiving the advertisement from the BR5 device and the BR6 device, the BR1 device calculates its unicast routing forwarding table in a manner similar to that in Embodiment II, as shown in Fig. 24, and generates a BIER forwarding table entry. Herein, it is assumed that the metric of the prefix advertised by the BR5 is better, and the BIER forwarding table generated by the BR1 is as shown in Fig. 25. The BR2 device also performs processing in this way, and in the process of the BR2 device computing the BIER forwarding table, it may be considered that the metric of the prefix advertised by the BR6 is better, and therefore the prefixes corresponding to the BFR-ID 1/2 on the BR2 device may be BR6-Prefix and the next hop is BR6.

The BR1 and BR2 devices also need to continue to advertise the two BFR-IDs to the domain1; therefore, the BR1 and BR2 devices may carry out-of-domain SUB-SUB-TLV when advertising their own prefix routing via the ISIS protocol, such that the domain1 receives the BFR-ID information from the domain2. The advertisement from the domain1 to the domain2/3 and from the domain3 to the domain1 is performed in a similar way, and will not be repeated here.

Taking BFR1 as an example, unicast routing tables of the BR1 and BR2 are calculated first, and when the BIER forwarding table is calculated, a manner similar to that in Embodiment II is also adopted. When there are same out-of-domain BFR-ID entries, a prefix having superior cost is selected by comparison as a prefix and the next hop thereof is selected, or an ECMP entry is formed when the two have the same detailed degree.

Assuming that network deployment has a problem again, among BFR-IDs transferred from the domain3 to the domain1, there is also one BFR-ID which is the same as that of the boundary device BFER1 of the domain2. Taking BFR1 as an example, when the BIER forwarding table is calculated, it is found that entries with the same BFR-ID exist, and the corresponding prefixes are all from the outside the domain, but from different domains; at this time, it also indicates that a configuration error occurs, update of the BIER forwarding entry needs to be stopped, and the error is displayed by means of an alarm or error information, or is reported to a controller, so as to prompt a problem occurring in network deployment.

It should be noted that, for the sake of simplicity, the number of edge devices and the number of intermediate devices in the figures are not too much, and actual networks to which the embodiments of the present invention are applied do not limit the number of these devices. For the calculated ordinary unicast routing table and the BIER forwarding table, the next hops thereof are based on actual devices, and are not limited to the direct connection situations described in the embodiments of the present invention

Thus, according to the advertisement and calculation methods described in the embodiments of the present invention, correct advertisement and calculation methods can be provided for cross-domain deployment of BIERs, thereby avoiding the problem of a calculation error of a BIER forwarding table entry, and thus accelerating the wide deployment of BIER technology. In addition, when calculating and generating the routing table and the BIER forwarding table according to the advertised prefixes, an underlay protocol of the BIER clearly distinguishes intra-domain and interdomain receipt of BFR-IDs, thereby ensuring that a BIER forwarding table entry can be correctly generated, such that the BIER forwarding is accurate.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. On the basis of such understanding, the portion of the technical solution of the present invention that contributes in essence or to the existing technology may be embodied in the form of a software product stored in a storage medium (such as an ROM/RAM, a magnetic disk and an optical disc); and the storage medium includes several instructions to cause a terminal device (which may be a mobile phone, a computer, a server or a network device, etc.) to perform the method according to the various embodiments of the present invention.

The present embodiment further provides an apparatus for generating forwarding table, wherein the apparatus is used to implement the foregoing embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

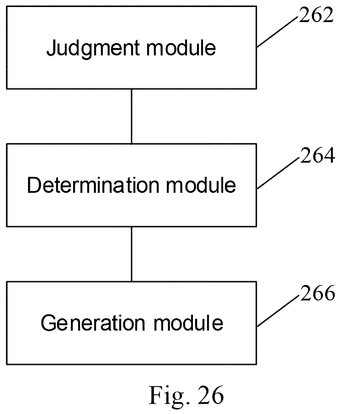

Fig. 26 is a structural block diagram of an apparatus for generating forwarding table according to embodiments of the present invention. As shown in Fig. 26, the apparatus includes:
a judgment module 262, configured to judge, when a target forwarding table is to be generated on the basis of a received first advertisement message, whether there is a second bit-forwarding router-identifier (BFR-ID) same as a first BFR-ID in existing BFR-IDs in the target forwarding table, wherein the first advertisement message is used for advertising the first BFR-ID of a first BFER;
a determination module 264, configured to determine, when it is determined that there is the second BFR-ID, a target bit-forwarding router-prefix (BFR-Prefix) from a first BFR-Prefix corresponding to the first BFR-ID and a second BFR-Prefix corresponding to the second BFR-ID; and
a generation module 266, configured to generate the target forwarding table on the basis of the target BFR-Prefix.

In an optional embodiment, the determination module 264 includes:
a first comparison unit, configured to compare first content included in the first BFR-Prefix with second content included in the second BFR-Prefix;
a first determination unit, configured to determine the first BFR-Prefix as the target BFR-Prefix when it is determined that the first content is more detailed than the second content; and
a second determination unit, configured to determine the second BFR-Prefix as the target BFR-Prefix when it is determined that the second content is more detailed than the first content.

In an optional embodiment, the determination module 264 includes:
a second comparison unit, configured to compare first attribute information of the first BFR-Prefix with second attribute information of the second BFR-Prefix;
a third determination unit, configured to determine the first BFR-Prefix as the target BFR-Prefix when it is determined that an attribute value of the first attribute information is superior to an attribute value of the second attribute information; and
a fourth determination unit, configured to determine the second BFR-Prefix as the target BFR-Prefix when it is determined that an attribute value of the second attribute information is superior to an attribute value of the first attribute information.

In an optional embodiment, the generation module 266 includes:
an update module, configured to update, in a case that the target BFR-Prefix is the first BFR-Prefix, the second BFR-Prefix corresponding to the second BFR-ID and a next-hop device which already exist in the target forwarding table to the first BFR-Prefix and a next-hop device corresponding to the first BFR-Prefix; and
a maintenance module, configured to maintain, in a case that the target BFR-Prefix is the second BFR-Prefix, the second BFR-ID and the second BFR-Prefix corresponding to the second BFR-ID and the next-hop device which already exist in the forwarding table unchanged.

In an optional embodiment, the apparatus further includes:
a first execution module, configured to in a case that the first advertisement message further includes first-domain identifier DOMAIN-ID information of a domain where the first BFER is located, after determining that there is the second BFR-ID same as the first BFR-ID in existing BFR-IDs in the target forwarding table, execute error handling when it is determined that either or both of the BFR-Prefixes respectively corresponding to the first BFR-ID and the second BFR-ID comes/come from within a domain;
a second execution module, configured to in a case that the first advertisement message further includes first-domain identifier DOMAIN-ID information of a domain where the first BFER is located, after determining that there is the second BFR-ID same as the first BFR-ID in existing BFR-IDs in the target forwarding table, determine second DOMAIN-ID information of a domain where a second BFER is located which is carried in a second advertisement message for advertising the second BFR-ID when it is determined that the BFR-Prefixes respectively corresponding to the first BFR-ID and the second BFR-ID are both from the outside of the domain, and execute error handling in the case that the first DOMAIN-ID information is different from the second DOMAIN-ID information.

In an optional embodiment, the second advertisement message includes second out-of-domain TLV, wherein the second out-of-domain TLV carries second BFR-ID information; or, the second out-of-domain TLV carries the second BFR-ID information and the second DOMAIN-ID information of the domain where the second BFER is located.

In an optional embodiment, the second advertisement message includes the second BFR-Prefix, and the second out-of-domain TLV is sent following the second BFR-Prefix, wherein the second BFR-Prefix includes one of: an aggregate routing prefix, a default routing prefix, and a BFR-Prefix of a boundary device.

In an optional embodiment, the first advertisement message includes first out-of-domain TLV, wherein the first out-of-domain TLV carries first BFR-ID information; or, the first out-of-domain TLV carries the first BFR-ID information and the first DOMAIN-ID information of the domain where the first BFER is located.

In an optional embodiment, the first advertisement message includes the first BFR-Prefix, and the first out-of-domain TLV is sent following the first BFR-Prefix, wherein the first BFR-Prefix includes one of: an aggregate routing prefix, a default routing prefix, and a BFR-Prefix of a boundary device.

In an optional embodiment, both the first execution module and the second execution module may execute error handling by at least one of the following methods:
an alarm prompt is performed to prompt that a problem exists in current network deployment; and
alarm information is sent to a controller, to indicate that a problem exists in current network deployment of the controller.

It should be noted that the described modules may be implemented by software or hardware. The latter may be implemented in the following manner, but is not limited thereto: all the described modules are located in the same processor; or all the modules are located in different processors in any arbitrary combination manner.

Embodiments of the present invention further provide a computer-readable storage medium, the computer-readable storage medium storing a computer program, wherein the computer program is configured to execute the steps in any one of the method embodiments when running.

In an embodiment, the computer-readable storage medium may include, but is not limited to: any medium that can store a computer program, such as a USB flash drive, a Read-Only Memory (ROM for short), a Random Access Memory (RAM for short), a removable hard disk, a magnetic disk, or an optical disc.

Embodiments of the present invention further provide an electronic apparatus, including a memory and a processor; wherein the memory stores a computer program, and the processor is configured to run the computer program to execute the steps in any one of the method embodiments above.

In an embodiment, the electronic apparatus can further include a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

It is apparent that a person skilled in the art shall understand that all of the described modules or steps in the present invention may be implemented by using a general computing apparatus, may be centralized on a single computing apparatus or may be distributed on a network composed of multiple computing apparatuses, and may be implemented by using executable program codes of the computing apparatus. Thus, the program codes may be stored in a storage apparatus and executed by the computing apparatus, and in some cases, the shown or described steps may be executed in a sequence different from that shown herein, or the modules or steps are manufactured into integrated circuit modules, or multiple modules or steps therein are manufactured into a single integrated circuit module for implementation. Thus, embodiments of the present invention are not limited to any specific hardware and software combinations.

The content above merely relates to preferred embodiments of the present invention, and is not intended to limit the present invention. For a person skilled in the art, embodiments of the present invention may have various modifications and changes. Any modifications, equivalent replacements, improvements, etc. made within the principle of embodiments of the present invention shall all fall within the scope of protection of embodiments of the present invention.

## Claims

1. A method for generating a forwarding table, comprising:
judging, when a target forwarding table is to be generated on the basis of a received first advertisement message, whether there is a second bit-forwarding router-identifier ,BFR-ID, same as a first BFR-ID in existing BFR-IDs in the target forwarding table, wherein the first advertisement message is used for advertising the first BFR-ID of a first BFER;
determining, when it is determined that there is the second BFR-ID, a target bit-forwarding router-prefix ,BFR-Prefix, from a first BFR-Prefix corresponding to the first BFR-ID and a second BFR-Prefix corresponding to the second BFR-ID; and
generating the target forwarding table on the basis of the target BFR-Prefix.

2. The method according to claim 1, wherein determining the target bit-forwarding router-prefix BFR-Prefix, from the first BFR-Prefix corresponding to the first BFR-ID and the second BFR-Prefix corresponding to the second BFR-ID, comprising:
comparing first content comprised in the first BFR-Prefix with second content comprised in the second BFR-Prefix;
determining the first BFR-Prefix as the target BFR-Prefix when it is determined that the first content is more detailed than the second content; and
determining the second BFR-Prefix as the target BFR-Prefix when it is determined that the second content is more detailed than the first content.

3. The method according to claim 1, wherein determining the target bit-forwarding router-prefix BFR-Prefix, from the first BFR-Prefix corresponding to the first BFR-ID and the second BFR-Prefix corresponding to the second BFR-ID, comprising:
comparing first attribute information of the first BFR-Prefix with second attribute information of the second BFR-Prefix;
determining the first BFR-Prefix as the target BFR-Prefix when it is determined that an attribute value of the first attribute information is superior to an attribute value of the second attribute information; and
determining the second BFR-Prefix as the target BFR-Prefix when it is determined that an attribute value of the second attribute information is superior to an attribute value of the first attribute information.

4. The method according to claim 1, wherein generating the target forwarding table on the basis of the target BFR-Prefix, comprising:
updating, in a case that the target BFR-Prefix is the first BFR-Prefix, the second BFR-Prefix corresponding to the second BFR-ID and a next-hop device which already exist in the target forwarding table to the first BFR-Prefix and a next-hop device corresponding to the first BFR-Prefix; and
maintaining, in a case that the target BFR-Prefix is the second BFR-Prefix, the second BFR-ID and the second BFR-Prefix corresponding to the second BFR-ID and the next-hop device which already exist in the forwarding table unchanged.

5. The method according to claim 1, wherein in a case that the first advertisement message further comprises first-domain identifier DOMAIN-ID information of a domain where the first BFER is located, after determining that there is the second BFR-ID same as the first BFR-ID in existing BFR-IDs in the target forwarding table, further comprising:
executing error handling when it is determined that either or both of the BFR-Prefixes respectively corresponding to the first BFR-ID and the second BFR-ID comes/come from within a domain; and
determining second DOMAIN-ID information of a domain where a second BFER is located which is carried in a second advertisement message for advertising the second BFR-ID when it is determined that the BFR-Prefixes respectively corresponding to the first BFR-ID and the second BFR-ID are both from the outside of the domain, and executing error handling when the first DOMAIN-ID information is different from the second DOMAIN-ID information.

6. The method according to claim 5, wherein the second advertisement message comprises second out-of-domain TLV, wherein,
the second out-of-domain TLV carries second BFR-ID information; or
the second out-of-domain TLV carries the second BFR-ID information and the second DOMAIN-ID information of the domain where the second BFER is located.

7. The method according to claim 6, wherein the second advertisement message comprises the second BFR-Prefix, and the second out-of-domain TLV is sent following the second BFR-Prefix, wherein the second BFR-Prefix comprises one of: an aggregate routing prefix, a default routing prefix, and a BFR-Prefix of a boundary device.

8. The method according to claim 1, wherein the first advertisement message comprises first out-of-domain TLV, wherein,
the first out-of-domain TLV carries first BFR-ID information; or
the first out-of-domain TLV carries the first BFR-ID information and the first DOMAIN-ID information of the domain where the first BFER is located.

9. The method according to claim 8, wherein the first advertisement message comprises the first BFR-Prefix, and the first out-of-domain TLV is sent following the first BFR-Prefix, wherein the first BFR-Prefix comprises one of: an aggregate routing prefix, a default routing prefix, and a BFR-Prefix of a boundary device.

10. The method according to claim 5, wherein executing error handling comprises at least one of:
performing an alarm prompt to prompt that a problem exists in current network deployment; and
sending alarm information to a controller, to indicate that a problem exists in current network deployment of the controller.

11. An apparatus for generating a forwarding table, comprising:
a judgment module, configured to judge, when a target forwarding table is to be generated on the basis of a received first advertisement message, whether there is a second bit-forwarding router-identifier ,BFR-ID, same as a first BFR-ID in existing BFR-IDs in the target forwarding table, wherein the first advertisement message is used for advertising the first BFR-ID of a first BFER;
a determination module, configured to determine, when it is determined that there is the second BFR-ID, a target bit-forwarding router-prefix BFR-Prefix, from a first BFR-Prefix corresponding to the first BFR-ID and a second BFR-Prefix corresponding to the second BFR-ID; and
a generation module, configured to generate the target forwarding table on the basis of the target BFR-Prefix.

12. A computer-readable storage medium, wherein the computer-readable storage medium stores a computer program, and the computer program is configured to, when executed by a processor, implement the method as claimed in any one of claims 1 to 10.

13. An electronic apparatus, comprising a memory, a processor, and a computer program which is stored on the memory and can be run on the processor, the processor is configured to execute the computer program to implement the method as claimed in any one of claims 1 to 10.
